# EUROPEAN PATENT APPLICATION

(11) **EP 2 713 329 A1**
(43) Date of publication of application: **02.04.2014**
(21) Application number: 12186190.0
(22) Date of filing: 26.09.2012
(51) Int. Cl.: G06Q 30/02, G06Q 50/00

(54) **Method and system of suggesting establishments**

(71) Applicant: BlackBerry Limited, Waterloo, ON N2K 0A7 (CA)
(72) Inventor: Klassen, Gerhard Dietrich, Waterloo, Ontario N2L 3W8 (CA); Abellera, Suzanne, Palo Alto, CA 94306 (US); Kolstad, Kjell-Eivind, Waterloo, Ontario N2L 3W8 (CA)
(74) Representative: Roberts, Gwilym Vaughan

(57) **Abstract**

The present disclosure provides for search optimization of searches for establishments. Social network communications posted at one or more social media networking sites are monitored by a social network server from which one or more indicators of popularity of the establishment can be determined by the social network server. A popularity score of the monitored establishment or establishments may be generated from the determined indicators of popularity. In response to a search query, the popularity score of the monitored establishments may be returned by the social network server as a search result to a user via an electronic communication device.

## Description

### CROSS-REFERENCE TO RELATED APPLICATIONS

The application is related to co-pending Attorney Docket Number 39789-US-PAT, filed on even date herewith, which is incorporated herein in its entirety.

### TECHNICAL FIELD

The present disclosure relates generally to the field of search optimization, and more particularly to search optimization in a communications network.

### BACKGROUND

Users of electronic communication devices, including mobile or wireless devices such as smart phones, mobile phones, and personal digital assistants or PDAs, have access to a number of convenient and useful applications installed on their electronic communication devices. Email, calendar, Web browser and Internet search applications are some examples of such applications.

With use of a Web browser or search application, an electronic communication device operating in a communication environment, such as a wireless network, may interface with a server of another communication network (e.g., the Internet) to access information. A user of the communication device may therefore enter a search query using a search application available on the communication device in order to receive relevant, useful information in response. One search commonly performed by a user of a mobile electronic communication device is a search to find good restaurants in a given geographical area. This is particularly helpful when the user is visiting an area that is unfamiliar. Search programs for restaurants, however, typically identify and rank restaurants by type, such as Mexican, Asian, Italian, American, etc. If the user does not know a type of restaurant to search, and simply only wishes to find the best restaurant in a given area without being constrained by restaurant type, the search applications currently available are not very helpful.

### BRIEF DESCRIPTION OF THE DRAWINGS

Example embodiments of the present disclosure will be described below with reference to the included drawings such that like reference numerals refer to like elements and in which:

**FIG. 1** is a block diagram of a communications system that includes a social network server, a communications network, and various social media users of a social network, in accordance with various aspects of the present disclosure;

**FIG. 2** is an illustration of a communications system that employs a network operations center (NOC), in accordance with various aspects of the present disclosure;

**FIG. 3** is a detailed block diagram of an example mobile communication device, in accordance with various aspects of the present disclosure;

**FIG. 4** illustrates applications that may be stored in a memory of a communication device, in accordance with various aspects of the present disclosure;

**FIG. 5** illustrates a flow illustrative of various methods, in accordance with various example embodiments of the present disclosure.

### DETAILED DESCRIPTION

In accordance with the various example embodiments presented herein, a user of a communication device is able to better and more efficiently search for an establishment on the basis of establishment popularity as opposed to establishment type. Utilizing a search application, such as a web browser accessible to the user through the user interface of the search application, the user may search for an establishment, such as a restaurant, entertainment venue, sports complex, retail establishment, or the like, over the Internet or World Wide Web. The user may search for a popular establishment in a given geographical area or location as reflected in a popularity score or ranking assigned to one or more establishments returned to the user in response to the search query. The popularity score or ranking of an establishment is generated from one or more indicators of popularity of the establishment that are determined from electronic communications posted about an establishment by persons in a social network that can be monitored and analyzed by one or more social network servers. The popularity score returned for an establishment may reflect the popularity of a particular establishment vis-à-vis other establishments, in which case the returned search result may be a popularity ranking. The user need not specify a type of establishment for the search query. Generation of an establishment's popularity score or ranking is transparent to the user and may be performed by one or more social network servers.

One or more indicators of popularity of one or more establishments may be determined by monitoring electronic communications posted on one or more social networking sites on the Internet to determine indicators of popularity available on these sites at the time of monitoring. Indicators of popularity that might be determined from monitored electronic communications may include when people frequent an establishment, whether local people frequent an establishment, and the number of people who frequent an establishment.

One or more social network servers coupled to one or more social networks may monitor these electronic communications about establishments posted on the social networking sites, which may be postings, blogs, or the like, to determine indicators of popularity of the establishment. Social network users may identify a particular establishment by its geographical location or geographical area in postings so that the social network servers can associate a particular communication as being associated with a particular establishment. Generally, the more postings about a particular establishment, the more popular the establishment and thus the higher popularity score that can be attributed to the establishment.

Therefore, in accordance with an aspect of the present disclosure, there is provided a method for determining restaurant popularity, including for one or more restaurants: monitoring electronic communications about an establishment posted by one or more persons in a social network; determining from the monitored electronic communications at least one indicator of popularity of the establishment; and generating a popularity score of the establishment from the determined at least one indicator of popularity of the establishment.

In accordance with another aspect of the present disclosure, there is provided a non-transitory computer-readable medium having computer-executable instructions for causing a server comprising a processor and associated memory to manage electronic communications within a social group of a social network comprising: monitoring electronic communications about an establishment posted by one or more persons in the social network; determining from the monitored electronic communications at least one indicator of popularity of the establishment; and generating a popularity score of the establishment from the determined at least one indicator of popularity of the establishment.

In accordance with a further aspect of the present disclosure, there is provided a social network server, coupled to a social network, that facilitates exchange of electronic communications within a social group of the social network, including: a processor; and a memory coupled to and in cooperative arrangement with the processor, the processor and the memory configured to: monitor electronic communications about an establishment by one or more persons in a social network; determine from the monitored electronic communications at least one indicator of popularity of the establishment; and generate a popularity score of the establishment using the determined at least one indicator of popularity of the establishment.

For simplicity and clarity of illustration, reference numerals may be repeated among the figures to indicate corresponding or analogous elements. Numerous details are set forth to provide an understanding of the example embodiments described herein. The example embodiments may be practiced without these details. In other instances, well-known methods, procedures, and components have not been described in detail to avoid obscuring the example embodiments described. The description is not to be considered as limited to the scope of the example embodiments described herein.

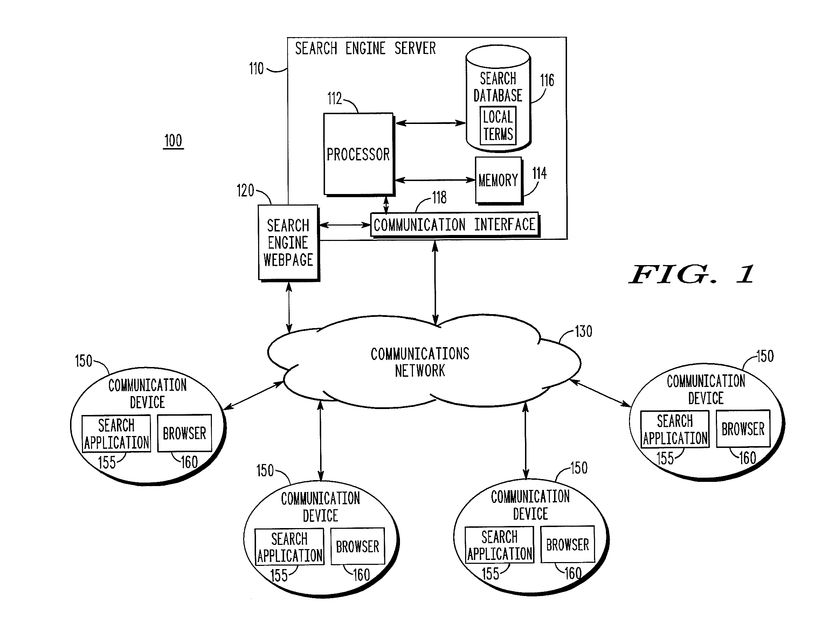

One or more indicators of popularity of an establishment may be determined by monitoring communications over a communications network, such as by monitoring postings, tweets, blog postings, etc. on social networking sites. Referring now to **FIG. 1**, a block diagram of a communications system 100 that includes a social network server 110, a communications network 130, and various social media users 140 of a social network, is illustrated, in accordance with various examples of the present disclosure. The communications system 100 can be for a social network which may or may not have instant messaging (IM) capabilities, as shown. Members of a social networking group are illustrated as social media users 1, 2, 3, 4, etc. that are able to communicate on the social network via communication devices 150. In accordance with various examples, social network server 110 is coupled to communications network 130 to facilitate the exchange of electronic communications within a social networking group of the communications network. Social network 110 can monitor and analyze the content of social network communications within one or more social networks.

Social network server 110 may include a processor 112, a memory 114, and associated database 116. The social network server 110 is able to communicate with the communications network via communication interface 118, as shown. As mentioned, the social network server may or may not have instant messaging (IM) capabilities, which may be provided by IM server 120. Database 116 can store data relating to various applications, including third party applications, data related to users 140 and friends, data for stored programs and generally data of use in the social network. Processor 112 is operative with database 116, memory 114, and communication interface 118 to effectively manage or regulate communications within a social networking group of a social network as will be described. Data including electronic communications or messages within the social network can be transmitted to and from various members 140 of the social network through communication interface 118 of the social network server and through communications network 130. Communications network 130 can be a wireless communications network and the various social media users 140 could use portable mobile devices, such as wireless communication devices. If utilized, IM server 120 may support various forms of messaging services, such as Short Message Service (SMS), Blackberry Messenger (BBM), etc.

Social network server 110 may include a number of different servers, with each server having one or more processors 112, databases 116, memories 114, and respective communication interface 118. Multiple IM servers 120 may also be used. The social network server 110 may be by way of example, and not limitations, a Network Operations Center (NOC), such as a Blackberry Enterprise Server (BES), or other central server arrangement that can combine many social networks and manage them collectively. Load balancing between various social network servers 110 may be employed in such configurations.

Communication device 150 is a two-way electronic communication device having at least data and possibly also voice communication capabilities, and the capability to communicate with other communication devices or computer systems, for example, via the Internet. A communication device 150 may further be a mobile or handheld electronic device and may be wireless. Depending on the functionality provided by the electronic communication device, in the various examples described herein, the device may be a data communication device, a multiple-mode communication device configured for both data and voice communication, a smartphone, a mobile telephone or a personal digital assistant PDA (personal digital assistant) enabled for wireless communication, or a computer system with a wireless modem. Other examples of mobile electronic devices include mobile, or handheld, wireless communication devices such as pagers, cellular phones, cellular smart-phones, wireless organizers, wirelessly enabled notebook computers, tablet computing devices, and so forth. The mobile electronic device may also be a portable electronic device without wireless communication capabilities, such as a handheld electronic game device, digital photograph album, digital camera, or other device.

From the above description, then, it can be seen that a social network server, coupled to a communications network, can facilitate search optimization for one or more communication device users who submit search inquiries. The social network server 110 may be configured to observe messages, such as IMs, in a social network, discover social network traffic on point about one or more establishments; this may be automatic or it may be done only in response to a search query from a user. Thus, processor 112 and memory 114 of the social network server 110 may thus be operable to generate a popularity score of the establishment and this may be done in response to a search query about the establishment. Processor 112 and memory 114 in cooperative arrangement can observe messages communicated within a social group of a social network that share a given content, as discussed above. The processor and a memory of the social network server, coupled together and in cooperative arrangement, may be configured to: monitor electronic communications about an establishment by one or more persons in a social network; determine from the monitored electronic communications at least one indicator of popularity of the establishment; and generate a popularity score of the establishment using the determined at least one indicator of popularity of the establishment. Electronic communications about one or more establishments may be monitored by the social network server in response to a search query made by a user of a communications device about a particular establishment in a geographical location or about establishments in a particular geographical area. The geographic location or geographical area may refer to an address, street, city, etc. where the establishment or establishments are located.

As shown in **FIG. 1**, the processor 112 and the memory 114 are coupled together and in cooperative arrangement to determine whether one or more messages communicated by or to or between members 140 of the social group have content concerned with or about the establishment of interest; these messages may be stored in memory 114 of the social network server 110. The processor 112 working together with the memory 114 can monitor messages communicated within the social group and determine messages sharing given content, such as about a particular establishment, which has been communicated to the social group. The social network server 110 forwards new social network messages to the social network and thus the social network server 110 can monitor social network messages and process the content thereof. As will be appreciated by those skilled in the art, the social network server 110 may include natural language parsing capabilities to convert the text of social network messages into a quantifiable, searchable format.

Social network server 110 may determine that a growth rate of distribution of the plurality of messages sharing content about a given establishment within the social group meets or exceeds a growth rate threshold, or that a quantity of the plurality of messages sharing the given content meets or exceeds a message quantity threshold, or both. These can be considered indicators of popularity of the establishment; the more people are discussing the establishment of interest in social network sites, the more popular it may be considered to be. The social network server 110 can determine the existence of a sufficient amount of content about an establishment, perhaps sufficient to satisfy or exceed a popularity threshold that can be used to generate a popularity score or ranking of the establishment. Such topic-specific content may be stored in database 116 in the memory 114 of the social network server 110.

The processor 112 and the memory 114 of the social network server 110 may be further configured to monitor social network communications, determine from the monitored communication one or more indicators of popularity, and generate a popularity score for either an establishment identified in a search request or for each establishment in a geographical area, the geographical area associated with an establishment identified in a search request by a user or that is itself identified by the user in a search request. A popularity ranking of the establishments in the geographical area may be determined in accordance with the generated popularity score of each of the establishments and the popularity ranking of the establishments communicated in response to either type of search query. The social network server can return the results of the search on the updated search query to the user via the electronic communication device.

Social network server 110 may include a number of different servers, with each server having one or more processors 112, databases 116, memories 114, and respective communication interfaces 118. Load balancing between various social network servers 110 may be employed in such configurations.

Communication device 150 is a two-way electronic communication device having at least data and possibly also voice communication capabilities, and the capability to communicate with other communication devices or computer systems, for example, via the Internet. A communication device 150 may further be a mobile or handheld electronic device and may be wireless. Depending on the functionality provided by the electronic communication device, in the various example embodiments described herein, the device may be a data communication device, a multiple-mode communication device configured for both data and voice communication, a smartphone, a mobile telephone or a personal digital assistant PDA (personal digital assistant) enabled for wireless communication, or a computer system with a wireless modem. Other examples of mobile electronic devices include mobile, or handheld, wireless communication devices such as pagers, cellular phones, cellular smart-phones, wireless organizers, wirelessly enabled notebook computers, and so forth. The mobile electronic device may also be a portable electronic device without wireless communication capabilities, such as a handheld electronic game device, digital photograph album, digital camera, or other device.

It can be seen that while the communication devices 150 can participate fully in the social network, the social network server 110 monitors the distribution and delivery of messages as they pass through.

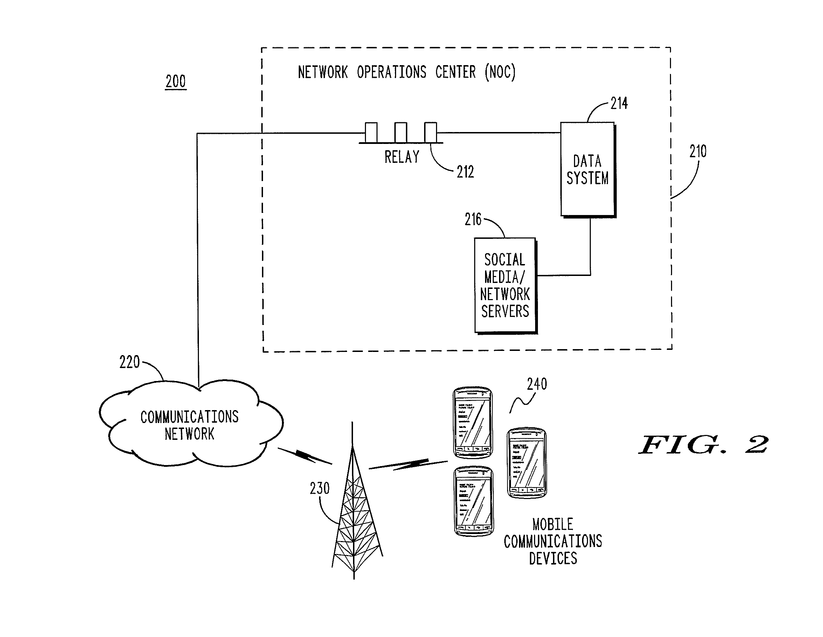

The social network server may be implemented as a NOC, such as BES, or other central server configuration capable to combine many social networks and manage them collectively. NOC may refer to one or more servers or locations from which control of a communications network, including a social media network, is exercised. NOCs commonly are responsible for monitoring communications networks and user activity in a social network for alarms or other conditions that require attention. The moderator entity referenced below may be a NOC technician, such as a site technician or a network engineer, for example. Referring now to **FIG. 2**, a block diagram of a communications system 200 that employs a Network Operations Center (NOC) 210 to monitor user activity in a social network is described. NOC 210 communicates with a communications network 220, such as a mobile carrier network, and one or more communication devices, such as mobile or wireless communication devices 240, can communicate wirelessly with carrier network 220 via one or more base station towers 230. In this example, the wireless communication devices 240 can be wireless handheld devices and are examples of a specific type of communication device 150.

NOC 210 has a relay 212, a data system 214, like a public Mobile Data System (MDS), and one or more social network/media servers 216 to which the data system is coupled. The NOC 210 can monitor the distribution size of a social network for a given topic or user(s) and, under control of the processor(s) of the social network servers 216, affect the communication time for new messages. As previously described, the NOC 210 can attenuate the speed of communications in various ways, such as reducing bit rate, placing packet gaps in messages, etc.

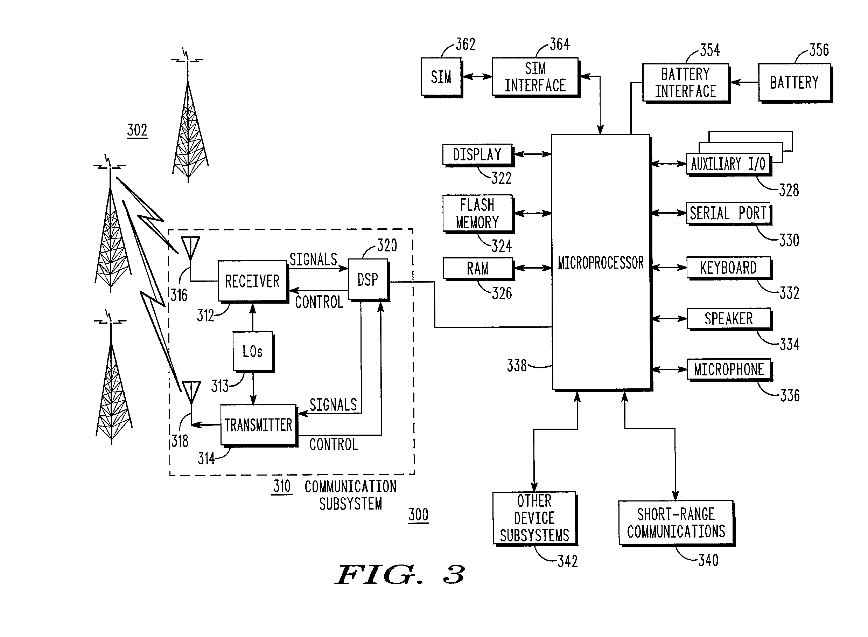

FIG. 3 is a detailed block diagram of an example mobile communication device 300 of the present disclosure. Mobile communication device 300 may be a two-way communication device having at least voice and advanced data communication capabilities, including the capability to communicate with other computer systems, and is a further example of a communication device 150 and wireless communication device 240. Depending on the functionality provided by mobile communication device 300, it may be referred to as a data messaging device, a two-way pager, a cellular telephone with data messaging capabilities, a wireless Internet appliance, or a data communication device (with or without telephony capabilities). Mobile communication device 300 may communicate with any one of a plurality of fixed transceiver stations 302 within its geographic coverage area.

Mobile communication device 300 will normally incorporate a communication subsystem 310, which includes a receiver 312, a transmitter 314, and associated components, such as one or more (which may be embedded or internal) antenna elements 316 and 318, local oscillators (LOs) 313, and a processing module such as a digital signal processor (DSP) 320. Communication subsystem 310 is analogous to RF transceiver circuitry 220 and antenna 221 shown in FIG. 2. As will be apparent to those skilled in field of communications, particular design of communication subsystem 310 depends on the communication network in which mobile communication device 300 is intended to operate.

Mobile communication device 300 may send and receive communication signals over the network after required network registration or activation procedures have been completed. Signals received by antenna 316 through the network are input to receiver 312, which may perform such common receiver functions as signal amplification, frequency down conversion, filtering, channel selection, and like, and in example shown in FIG. 3, analog-to-digital (A/D) conversion. A/D conversion of a received signal allows more complex communication functions such as demodulation and decoding to be performed in DSP 320. In a similar manner, signals to be transmitted are processed, including modulation and encoding, for example, by DSP 320. These DSP-processed signals are input to transmitter 314 for digital-to-analog (D/A) conversion, frequency up conversion, filtering, amplification and transmission over communication network via antenna 318. DSP 320 not only processes communication signals, but also provides for receiver and transmitter control. For example, the gains applied to communication signals in receiver 312 and transmitter 314 may be adaptively controlled through automatic gain control algorithms implemented in DSP 320.

Network access is associated with a subscriber or user of mobile communication device 300, and therefore mobile communication device 300 requires a Subscriber Identity Module or "SIM" card 362 (denoted more generally as "mem" in FIG. 3) to be inserted in a SIM interface 364 in order to operate in the network. SIM 362 includes those features described in relation to FIG. 2. Mobile communication device 300 is a battery-powered device so it also includes a battery interface 354 for receiving one or more rechargeable batteries 356. Such a battery 356 provides electrical power to most if not all electrical circuitry in mobile communication device 300, and battery interface 354 provides for a mechanical and electrical connection for it. The battery interface 354 is coupled to a regulator (not shown) which provides a regulated voltage V to all of the circuitry.

Mobile communication device 300 includes a microprocessor 338 (which is one implementation of controller 218 of FIG. 2) which controls overall operation of mobile communication device 300. Communication functions, including at least data and voice communications, are performed through communication subsystem 310. The communication techniques of the present disclosure may generally be controlled by microprocessor 338 in connection with DSP 320. Microprocessor 338 also interacts with additional device subsystems such as a display 322, a flash memory 324, a random access memory (RAM) 326, auxiliary input/output (I/O) subsystems 328, a serial port 330, a keyboard 332, a speaker 334, a microphone 336, a short-range communications subsystem 340, and any other device subsystems generally designated at 342. Some of the subsystems shown in FIG. 2 perform communication-related functions, whereas other subsystems may provide "resident" or on-device functions. Notably, some subsystems, such as keyboard 332 and display 322, for example, may be used for both communication-related functions, such as entering a text message for transmission over a communication network, and device-resident functions such as a calculator or task list. Operating system software used by microprocessor 338 may be stored in a persistent store such as flash memory 324, which may alternatively be a read-only memory (ROM) or similar storage element (not shown). Those skilled in the art will appreciate that the operating system, specific device applications, or parts thereof, may be temporarily loaded into a volatile store such as RAM 326.

Microprocessor 338, in addition to its operating system functions, enables execution of software applications on mobile communication device 300. A predetermined set of applications which control basic device operations, including at least data and voice communication applications, will normally be installed on mobile communication device 300 during its manufacture. An application that may be loaded onto mobile communication device 300 may be a personal information manager (PIM) application having the ability to organize and manage data items relating to user such as, but not limited to, e-mail, calendar events, voice mails, appointments, and task items. Naturally, one or more memory stores are available on mobile communication device 300 and SIM 356 to facilitate storage of PIM data items and other information. The PIM application has the ability to send and receive data items via the wireless network. In the present disclosure, PIM data items are seamlessly integrated, synchronized, and updated via the wireless network, with the mobile device user's corresponding data items stored or associated with a host computer system thereby creating a mirrored host computer on mobile communication device 300 with respect to such items. This is especially advantageous where the host computer system is the mobile communication device user's office computer system. Additional applications may also be loaded onto mobile communication device 300 through network, an auxiliary I/O subsystem 328, serial port 330, short-range communications subsystem 340, or any other suitable subsystem 342, and installed by a user in RAM 326 or a non-volatile store (not shown) for execution by microprocessor 338. Such flexibility in application installation increases the functionality of mobile communication device 300 and may provide enhanced on-device functions, communication-related functions, or both. For example, secure communication applications may enable electronic commerce functions and other such financial transactions to be performed using mobile communication device 300.

In a data communication mode, a received signal such as a text message, an e-mail message, or web page download will be processed by communication subsystem 310 and input to microprocessor 338. Microprocessor 338 will further process the signal for output to display 322 or alternatively to auxiliary I/O device 328. A user of mobile communication device 300 may also compose data items, such as e-mail messages, for example, using-keyboard 332 in conjunction with display 322 and possibly auxiliary I/O device 328. Keyboard 332 may be a complete alphanumeric keyboard or telephone-type keypad. These composed items may be transmitted over a communication network through communication subsystem 310. For voice communications, the overall operation of mobile communication device 300 is substantially similar, except that the received signals would be output to speaker 334 and signals for transmission would be generated by microphone 336. Alternative voice or audio I/O subsystems, such as a voice message recording subsystem, may also be implemented on mobile communication device 300. Although voice or audio signal output may be accomplished primarily through speaker 334, display 322 may also be used to provide an indication of the identity of a calling party, duration of a voice call, or other voice call related information, as some examples.

Serial port 330 in FIG. 3 may be implemented in a personal digital assistant (PDA)-type communication device for which synchronization with a user's desktop computer is a desirable, albeit optional, component. Serial port 330 enables a user to set preferences through an external device or software application and extends the capabilities of mobile communication device 300 by providing for information or software downloads to mobile communication device 300 other than through a wireless communication network. The alternate download path may, for example, be used to load an encryption key onto mobile communication device 300 through a direct and thus reliable and trusted connection to thereby provide secure device communication. Short-range communications subsystem 340 of FIG. 3 is an additional optional component which provides for communication between mobile communication device 300 and different systems or devices, which need not necessarily be similar devices.

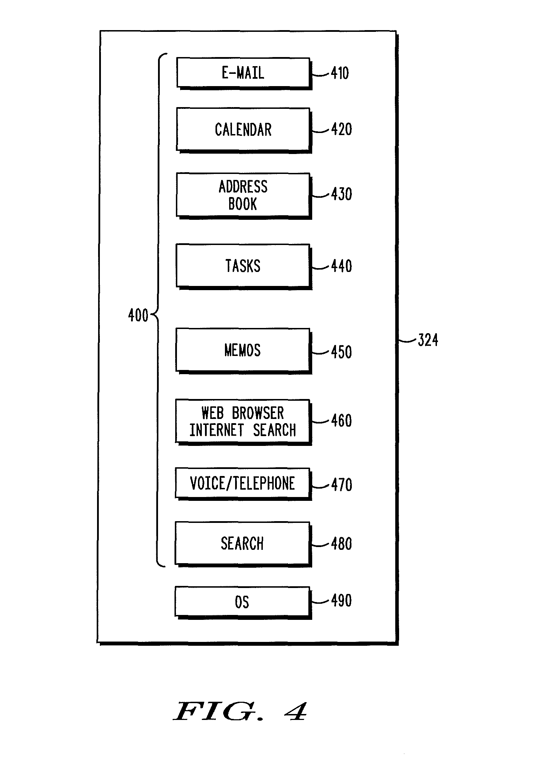

As shown further in **FIG. 4****,** memory 324 of mobile communication device 300 includes a plurality of applications or routines 400 associated with the visually displayed icons displayed on the display of the mobile communication device for the processing of data. Applications 400 may be in any of a variety of forms such as, without limitation, software, firmware, and the like. Applications 400 include, for example, an Electronic Mail (E-Mail) application 410 associated with E-mail icon, a Calendar application 420 associated with Calendar icon, an Address Book application 430 associated with Address Book icon, a Tasks application 440 associated with Tasks icon, a MemoPad (Memos) application 450 associated with a MemoPad icon, a Web Browser or search application 460 associated with Web Browser/Search Application icon, a Voice/Telephone application 470 associated with a Voice/Telephone icon, and a Local Device Search application 480 associated with a Local Device Search icon. An operating system (OS) program 490 also resides in memory 324.

The "home" screen output may be currently active and constitutes the main "ribbon" application for displaying these icons on the display of the communication device. An application, such as E-mail application 410, may then be initiated (opened or viewed) from the user interface provided by keyboard 214, and perhaps one or more auxiliary user interfaces (UI) 216, by providing a suitable user input to it. For example, E-mail application 410 may be initiated (opened or viewed) by activation of a pointing device, such as a rotating positioning wheel or stylus, for example, to highlight an icon associated with the E-mail application and providing a selection input. As another example, display 322 may display an icon associated with Search application 480 and accepts input from a positioning wheel or stylus to initiate a search from that icon. Applications 400 may be additionally or alternatively initiated (opened or viewed) from the user interface by providing another suitable input to it, such as by suitably rotating or "rolling" a trackball and providing a selection input by, for example, pushing the trackball or through appropriate manipulation of a stylus making contact with a touch screen of the display.

Although a specific mobile communication device 300 has just been described, any suitable mobile communication device or terminal may be part of the inventive methods and apparatus which will be described in fuller detail below. Note that many components of mobile device 202 shown and described may not be included (e.g. a full QWERTY keypad may be optional).

As previously discussed, a user of the mobile communication device may wish to know the popularity score of an establishment or of establishments in a given geographical location and so may initiate a search request to find out this information using the search application 460 running on the user's mobile device. The user may be interested in this information in a number of settings and for a variety of reasons. For example, the user may be visiting a city or neighbourhood with which he or she is unfamiliar and value the popularity score or rating to find a good restaurant while in the area. The monitoring may be in response to a search query about the restaurant or the geographical location or it may be on-going monitoring of the geographical location of the restaurant, as will be further discussed.

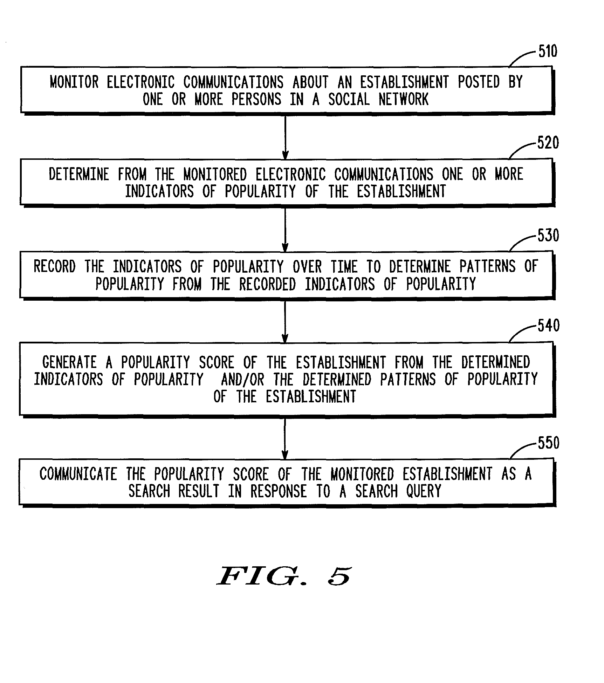

Reference is now made to **FIG. 5**, in which flowchart 500 illustrates a method of generating a popularity score of an establishment of interest based upon social electronic communications (blog postings, tweets, etc.) monitored by a social network server to determine one or more indicators of popularity associated with the establishment. Social network communications associated with a particular establishment may be monitored in response to the establishment being specified in a targeted search query by a user or social network communications associated with establishments within a geographical area may be monitored in response to a general search query about establishments in the geographic area; of course, if the particular establishment is included in the geographic area specified in the general search query, results for that establishment as well as for potentially other establishments in the geographic area may be communicated to the user.

At Block 510, for one or more establishments electronic communications about an establishment, such as a restaurant, posted by one or more persons in a social network area are monitored. Examples of social media or social networking communications may include postings, tweets, blog postings on social network sites. As previously noted, an establishment may be specified by a user in targeted search request or the establishment may be an establishment located in a geographical area specified by a user in a general search request. In a targeted search request, the user may wish to simply know the popularity of a particular establishment. In that case, in addition to the raw popularity score of the particular establishment the ranking of the establishment vis-à-vis other establishments in a geographical area that includes the particular establishment may also be returned as a search result. The monitored electronic communications about one or more establishments may include blog postings, tweets, and other social network postings posted in a social networking forum on the social network. As previously mentioned, in addition to a restaurant, the establishment may be a store, a sports complex, entertainment venue, retail establishment or the like.

At Block 520, one or more indicators of popularity of an establishment may be determined from the monitored electronic communications. As noted above, one or more social network servers may determine such indicators of popularity by monitoring the content and frequency of communications posted at one or more social networking sites. Indicators of popularity are varied and may include, for example, the number of people who frequent the restaurant, when people frequent the restaurant, and whether locals frequent the restaurant, in the case where the establishment is a restaurant. Indicators of popularity may in some cases correspond to indicators of quality of the restaurant. These indicators of popularity may be determined by monitoring the physical location of the restaurant or other establishment. Continuing with the restaurant example, determining from the monitored electronic communications the time of day when persons frequent the restaurant is an indicator of popularity of the restaurant. People frequenting a restaurant late in the day may indicate that people stay at the restaurant for a long time and bias towards a higher popularity rating. A local hangout may be packed at all times during operating hours and may indicate a popular restaurant. A restaurant in a tourist area may not be busy late in the day. Communications about the restaurant may be at periodic time intervals during operating hours of the restaurant to determine a distribution of a number of persons who frequent the restaurant over the periodic time intervals. The popularity score of the restaurant may then be generated using the determined distribution of the number of persons frequenting the restaurant over the periodic time intervals.

Whether local persons frequent a restaurant is another indicator of popularity that may be determined from social networking communications. Whether local patrons (locals) frequent the restaurant is another indicator of popularity and may thus be used to generate a popularity score. Generally, the more locals that frequent restaurant, the more popular the restaurant and thus the higher the popularity score. The number of locals frequenting the restaurant at any given time may be determined by analyzing who is communicating on social networking sites about the restaurant. The social network server can know, from profile information, for example, whether a user is local or within a given geographical area of the restaurant or restaurants being analyzed.

Social network communications may also indicate the number of people who frequent a given restaurant and this indicator of popularity may be useful in determining a popularity score of the restaurant. Often, people post reviews or commentary about a restaurant following dining there or even while at the restaurant. The number of people who frequent the restaurant may also be an indicator of quality, as well as popularity. Generally, the more people who frequent the restaurant, the more popular the restaurant may be considered.

Monitoring communications about a restaurant or other establishment may be an ongoing effort, or it may commence in response to a user search query from a user of a communications device that launches the search via a user interface of the communications device in communication with a search application such as a browser. Monitoring communications about the restaurant may be on-going activity by one or more social media servers, as in the case of restaurants in a high-traffic, tourist area as many people visiting that area would want to know about the popularity of restaurants there. On-going monitoring will allow one or more indictors of popularity to be recorded from which patterns of popularity can be determined. Either way, information captured from the monitoring of social networking communications may be used to generate a popularity score or ranking, and the generation of the popularity score or ranking is transparent to the user initiating a search for a good restaurant.

Accordingly, at Block 530, one or more indicators of popularity may be recorded over time to determine patterns of popularity from the recorded indicators of popularity. In this case, the popularity score of the restaurant or other establishment generated at Block 540 could be generated from the determined patterns of popularity.

At Block 540, a popularity score of the establishment can be generated from the determined one or moreindicators of popularity or from the determined patterns of popularity of the establishment. The popularity score of a restaurant, for example, may be a popularity ranking of the restaurant compared with other restaurants for which electronic communications have been posted over the social network. Thus, once any one or multiple ones of indicators of popularity are determined, a popularity score may be generated. These described indicators of popularity may be used singly or in combination to determine the popularity score. Further, the popularity score may encompass either raw, unranked popularity information, such as the number of postings about the restaurant on a given social networking site, the number of postings about the restaurant on a given social networking site in a given time period, etc., or the popularity score may comprise a popularity ranking in which the popularity score of the restaurant is given in comparison to other restaurants in the same geographical area (street, neighbourhood, city, etc.) that includes the geographical location of the restaurant, or in comparison to restaurants of the same type in the same geographical area, e.g. the best Asian restaurant in the city is X or the monitored restaurant is ranked the 3^{rd} most popular Asian restaurant out of 10 ranked Asian restaurants in the geographic area that encompasses the geographical location of the monitored restaurant.

At Block 550, the popularity score and/or popularity ranking can be communicated as a search result in response to a search query initiated by a user of an electronic device. Again, the search query may be a targeted search query about the establishment or the search query may be a general query about establishments in a geographical area that includes the establishment. The popularity score of a number of establishments, then, may be determined by the monitoring, determining and generating actions defined in Blocks 510, 520, and 540. At Block 540, a popularity ranking of the establishments in the geographical area is determined in accordance with the generated popularity score of each of the establishments. In this example, communicating the popularity score would include communicating the popularity ranking of the establishments as the search result in response to the search query.

As previously stated, the search query may be a query about establishments in a geographical area that includes the geographical location of the establishment, or it may be a query about a particular establishment itself. In the case where the search query is a query about establishments in the geographical area, the methodology may thus further include monitoring social media communications about a number of establishments in the geographical area and then generating a popularity score for each of these establishments. From this information, a popularity ranking of the establishments can be determined in accordance with the generated popularity score of each of the establishments. The popularity ranking of the establishments can then be provided as a search result in response to the search query about establishments in the geographical area. Consider, as an example, a search about restaurants located within a block area of a busy, tourist area of a city. Perhaps for five of these restaurants, social media communications can be monitored by a social network server to determine relevant indicators of popularity used to generate respective popularity scores and, in the aggregate, a ranking for each of these restaurants vis-à-vis the other restaurants within the block. Surely such information is useful and relevant to a tourist wishing to locate the best restaurant in that geographical area.

With regard to monitoring social network communications about one or more restaurants or other establishments at periodic time intervals, a time interval of the periodic time intervals corresponding to a peak number of persons frequenting the establishment can be determined from the determined distribution of the number of persons communicating about a about the establishment over the periodic time intervals. Moreover, with regard to generating the popularity score of the establishment using the determined distribution of the number of persons frequenting the establishment over periodic time intervals, consider the following examples in which the establishments are restaurants. A late time interval corresponding to a peak number of persons may indicate that people stay at the restaurant for a long period of time, and bias the restaurant towards a higher popularity score. The restaurant having a distribution that indicates being busier earlier in the day than later in the day may indicate that the geographical area of the restaurant is in a tourist area and this may accordingly affect the popularity score given the restaurant. A substantially equal distribution of the number of persons frequenting the restaurant over the monitored periodic time intervals may indicate that demand for the restaurant remains consistently high and may bias the restaurant towards a higher popularity score.

The actions of Blocks 510, 520, 530, 540 and 550 may be carried out by the processor and memory of one or more social network servers working together in cooperative arrangement as discussed above.

While the blocks including the methods are shown as occurring in a particular order, it will be appreciated by those skilled in the art that many of the blocks are interchangeable and can occur in different orders than that shown without materially affecting the end results of the methods.

The implementations of the present disclosure described above are intended to be examples only. Those of skill in the art can effect alterations, modifications and variations to the particular example embodiments herein without departing from the intended scope of the present disclosure. Moreover, selected features from one or more of the above-described example embodiments can be combined to create alternative example embodiments not explicitly described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The present disclosure may be embodied in other specific forms without departing from its spirit or essential characteristics. The described example embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope. [0059]

## Claims

1. A method for determining establishment popularity, comprising for one or more establishments:
monitoring electronic communications about an establishment posted by one or more persons in a social network (510);
determining from the monitored electronic communications at least one indicator of popularity of the establishment (520); and
generating a popularity score of the establishment from the determined at least one indicator of popularity of the establishment (540).

2. The method of claim 1, wherein the establishment is located in a geographical area and the electronic communications identify the establishment as associated with the geographical area, or
wherein monitoring electronic communications about the establishment is in response to one of a targeted search query about the establishment and a general search query about establishments in a geographical area that includes the establishment, or
wherein the popularity score of the establishment is a popularity ranking of the establishment compared with a plurality of establishments for which electronic communications about the plurality of establishments are posted over the social network.

3. The method of claim 1, further comprising:
communicating the popularity score of the establishment as a search result in response to a search query (550)
, where the search query is one of a targeted search query about the establishment and a general query about establishments in a geographical area that includes the establishment and further comprising:
performing the monitoring, determining and generating for each establishment of a plurality of establishments in the geographical area; and
determining a popularity ranking of the plurality of establishments in the geographical area in accordance with the generated popularity score of each of the plurality of establishments, and preferably further comprising:
communicating the popularity ranking of the plurality of establishments as the search result in response to the search query.

4. The method of claim 1, further comprising:
determining a popularity ranking of the establishment in comparison to a plurality of establishments, the popularity ranking determined in accordance with the generated popularity score of the establishment; and
in response to a search query, providing the determined popularity ranking of the establishment as a search result of the search query, and preferably wherein the popularity ranking of the establishment reflects the generated popularity
score of the establishment compared with the plurality of establishments in a geographical area that comprises the geographical location of the establishment.

5. The method of claim 1, further comprising:
performing the monitoring, the determining and the generating in response to a search query about establishments in a geographical area in which the establishment is located
, or further comprising:
recording the at least one indicator of popularity of the establishment over time to determine patterns of popularity of the establishment from the recorded at least one indicator of popularity (530); and
generating the popularity score of the establishment from the determined patterns of popularity
, or further comprising determining from the monitored electronic communications a number of persons who frequent the establishment as an indicator of popularity of the establishment.

6. The method of claim 1, further comprising determining from the monitored electronic communications a time of day when persons frequent the establishment as the at least one indicator of popularity of the establishment
, where determining the time of day when persons frequent the establishment further comprises:
monitoring electronic communications about the establishment at periodic time intervals during operating hours of the establishment to determine a distribution of a number of persons frequenting the establishment over the periodic time intervals; and
generating the popularity score of the establishment using the determined distribution of the number of persons frequenting the establishment over the periodic time intervals
, and preferably further comprising:
from the determined distribution of the number of persons frequenting the establishment over the periodic time intervals, determining a time interval of the periodic time intervals corresponding to a peak number of persons frequenting the establishment, or
where the establishment having a distribution that indicates being busier earlier in the day than later in the day indicates the geographical area of the establishment is in a tourist area and biases the popularity score higher, or
wherein a substantially equal distribution of the number of persons frequenting the establishment over the periodic time intervals biases the popularity score higher.

7. The method of claim 6, and preferably where a late time interval corresponding to a peak number of persons biases the popularity score higher.

8. The method of claim 1, further comprising:
determining from one or more of the monitored electronic communications and the social network a number of local persons who frequent the establishment as the at least one indicator of popularity of the establishment
, or wherein the establishment comprises a restaurant.

9. A social network server (110)coupled to a social network that facilitates exchange of electronic communications within a social group of the social network, comprising:
a processor (112); and
a memory (114) coupled to and in cooperative arrangement with the processor, the processor and the memory configured to:
monitor electronic communications about an establishment by one or more persons in a social network (510);
determine from the monitored electronic communications at least one indicator of popularity of the establishment (520); and
generate a popularity score of the establishment using the determined at least one indicator of popularity of the establishment (540).

10. The server of claim 9, where the electronic communications about the establishment comprise one or more of blog postings posted in a blog and social network postings posted in a social networking forum available on the social network
, or where electronic communications about the restaurant are monitored in response to a search query about the establishment.

11. The server of claim 9, the processor and the memory of the social network server further configured to:
communicate the popularity score of the monitored establishment as a search result in response to a search query received by the social network server.

12. The server of claim 11, where the search query is one of a targeted search query about the establishment and a general query about establishments in a geographical area that includes the establishment and the processor and the memory of the social network server further configured to:
perform the monitoring, determining and generating for each establishment of a plurality of establishments in the geographical area; and
determine a popularity ranking of the plurality of establishments in the geographical area in accordance with the generated popularity score of each of the plurality of establishments
, and preferably the processor and the memory of the social network server further configured to:
communicate the popularity ranking of the plurality of establishments as the search result in response to the search query.

13. The server of claim 9, the processor and the memory of the social network server further configured to:
determine a popularity ranking of the establishment in comparison to a plurality of establishments, the popularity ranking determined in accordance with the generated popularity score of the establishment; and
in response to a search query, provide the determined popularity ranking of the establishment
, and preferably where the search query is one of a targeted search query about the establishment and a general query about establishments in a geographical area that includes the establishment.

14. The server of claim 9, the processor and the memory of the social network server further configured to:
perform the monitoring, the determining and the generating in response to a search query about establishments in a geographical area in which the establishment is located
, or the processor and the memory of the social network server further configured to:
record the at least one indicator of popularity of the establishment over time to determine patterns of popularity of the establishment from the recorded at least one indicator of popularity; and
generate the popularity score of the establishment from the determined patterns of popularity
, or the processor and the memory of the social network server further configured to:
determine from the monitored electronic communications a time of day when persons frequent the establishment as an indicator of popularity of the establishment
, or the processor and the memory of the social network server further configured to:
determine from one or more of the monitored electronic communications and the social network a number of local persons who frequent the establishment as an indicator of popularity of the establishment
, or the processor and the memory of the social network server further configured to:
determine from the monitored electronic communications a number of persons who frequent the establishment as an indicator of popularity of the establishment, or
wherein the establishment comprises a restaurant.

15. A non-transitory computer-readable medium having computer-executable instructions for causing a server comprising a processor and associated memory to manage electronic communications within a social group of a social network comprising:
monitoring electronic communications about an establishment posted by one or more persons in the social network;
determining from the monitored electronic communications at least one indicator of popularity of the establishment; and
generating a popularity score of the establishment from the determined at least one indicator of popularity of the establishment, or
further comprising:
communicating the popularity score of the establishment as a search result in response to a search query, or
where the search query is one of a targeted search query about the establishment and a general query about establishments in a geographical area that includes the establishment and further comprising:
performing the monitoring, determining and generating for each establishment of a plurality of establishments in the geographical area; and
determining a popularity ranking of the plurality of establishments in the geographical area in accordance with the generated popularity score of each of the plurality of establishments, or
further comprising:
determining a popularity ranking of the monitored establishment in comparison to a plurality of establishments located in the geographical area, the popularity ranking determined in accordance with the generated popularity score of the monitored establishment; and
in response to a search query, provide the determined popularity ranking of the monitored establishment as a search result of the search query, or
where the search query is one of a targeted search query about the establishment and a general query about establishments in a geographical area that includes the establishment, or
further comprising:
performing the monitoring in response to a search query about establishments in the geographical area, or
further comprising:
recording the at least one indicator of popularity of the establishment present at the geographical location over time to determine patterns of popularity of the establishment from the recorded at least one indicator of popularity; and
generating the popularity score of the establishment from the determined patterns of popularity.

## Amended claims

### Amended claims in accordance with Rule 137(2) EPC.

**1.** A computer implemented method for determining establishment popularity, comprising for one or more establishments
monitoring electronic communications about an establishment posted by one or more persons in a social network (510);
determining from the monitored electronic communications at least one indicator of popularity of the establishment (520); and
generating a popularity score of the establishment from the determined at least one indicator of popularity of the establishment (540).

**2.** The method of claim 1, wherein the establishment is located in a geographical area and the electronic communications identify the establishment as associated with the geographical area, or wherein monitoring electronic communications about the establishment is in response to one of a targeted search query about the establishment and a general search query about establishments in a geographical area that includes the establishment, or
wherein the popularity score of the establishment is a popularity ranking of the establishment compared with a plurality of establishments for which electronic communications about the plurality of establishments are posted over the social network.

**3.** The method of claim 1, further comprising:
communicating the popularity score of the establishment as a search result in response to a search query (550)
, where the search query is one of a targeted search query about the establishment and a general query about establishments in a geographical area that includes the establishment and further comprising:
performing the monitoring, determining and generating for each establishment of a plurality of establishments in the geographical area; and
determining a popularity ranking of the plurality of establishments in the geographical area in accordance with the generated popularity score of each of the plurality of establishments, and
preferably further comprising:
communicating the popularity ranking of the plurality of establishments as the search result in response to the search query.

**4.** The method of claim 1, further comprising:
determining a popularity ranking of the establishment in comparison to a plurality of establishments,
the popularity ranking determined in accordance with the generated popularity score of the establishment; and
in response to a search query, providing the determined popularity ranking of the establishment as a search result of the search query, and preferably wherein the popularity ranking of the establishment reflects the generated popularity score of the establishment compared with the plurality of establishments in a geographical area that comprises the geographical location of the establishment.

**5.** The method of claim 1, further comprising:
performing the monitoring, the determining and the generating in response to a search query about establishments in a geographical area in which the establishment is located
, or further comprising:
recording the at least one indicator of popularity of the establishment over time to determine patterns of popularity of the establishment from the recorded at least one indicator of popularity (530); and
generating the popularity score of the establishment from the determined patterns of popularity
, or further comprising determining from the monitored electronic communications a number of persons who frequent the establishment as an indicator of popularity of the establishment.

**6.** The method of claim 1, further comprising determining from the monitored electronic communications a time of day when persons frequent the establishment as the at least one indicator of popularity of the establishment
, where determining the time of day when persons frequent the establishment further comprises:
monitoring electronic communications about the establishment at periodic time intervals during operating hours of the establishment to determine a distribution of a number of persons frequenting the establishment over the periodic time intervals; and
generating the popularity score of the establishment using the determined distribution of the number of persons frequenting the establishment over the periodic time intervals
, and preferably further comprising:
from the determined distribution of the number of persons frequenting the establishment over the periodic time intervals, determining a time interval of the periodic time intervals corresponding to a peak number of persons frequenting the establishment, or
where the establishment having a distribution that indicates being busier earlier in the day than later in the day indicates the geographical area of the establishment is in a tourist area and biases the popularity score higher, or
wherein a substantially equal distribution of the number of persons frequenting the establishment over the periodic time intervals biases the popularity score higher.

**7.** The method of claim 6, and preferably where a late time interval corresponding to a peak number of persons biases the popularity score higher.

**8.** The method of claim 1, further comprising:
determining from one or more of the monitored electronic communications and the social network a number of local persons who frequent the establishment as the at least one indicator of popularity of the establishment
, or wherein the establishment comprises a restaurant.

**9.** A social network server (110)coupled to a social network that facilitates exchange of electronic communications within a social group of the social network, comprising:
a processor (112); and
a memory (114) coupled to and in cooperative arrangement with the processor, the processor and
the memory configured to:
monitor electronic communications about an establishment by one or more persons in a social network (510);
determine from the monitored electronic communications at least one indicator of popularity of the establishment (520); and
generate a popularity score of the establishment using the determined at least one indicator of popularity of the establishment (540).

**10.** The server of claim 9, where the electronic communications about the establishment comprise one or more of blog postings posted in a blog and social network postings posted in a social networking forum available on the social network
, or where electronic communications about the restaurant are monitored in response to a search query about the establishment.

**11.** The server of claim 9, the processor and the memory of the social network server further configured to:
communicate the popularity score of the monitored establishment as a search result in response to a search query received by the social network server.

**12.** The server of claim 11, where the search query is one of a targeted search query about the establishment and a general query about establishments in a geographical area that includes the establishment and the processor and the memory of the social network server further configured to:
perform the monitoring, determining and generating for each establishment of a plurality of establishments in the geographical area; and
determine a popularity ranking of the plurality of establishments in the geographical area in accordance with the generated popularity score of each of the plurality of establishments
, and preferably the processor and the memory of the social network server further configured to:
communicate the popularity ranking of the plurality of establishments as the search result in response to the search query.

**13.** The server of claim 9, the processor and the memory of the social network server further configured to:
determine a popularity ranking of the establishment in comparison to a plurality of establishments, the popularity ranking determined in accordance with the generated popularity score of the establishment; and
in response to a search query, provide the determined popularity ranking of the establishment
, and preferably where the search query is one of a targeted search query about the establishment and a general query about establishments in a geographical area that includes the establishment.

**14.** The server of claim 9, the processor and the memory of the social network server further configured to:
perform the monitoring, the determining and the generating in response to a search query about establishments in a geographical area in which the establishment is located
, or the processor and the memory of the social network server further configured to:
record the at least one indicator of popularity of the establishment over time to determine patterns of popularity of the establishment from the recorded at least one indicator of popularity; and
generate the popularity score of the establishment from the determined patterns of popularity
, or the processor and the memory of the social network server further configured to:
determine from the monitored electronic communications a time of day when persons frequent the establishment as an indicator of popularity of the establishment
, or the processor and the memory of the social network server further configured to:
determine from one or more of the monitored electronic communications and the social network a number of local persons who frequent the establishment as an indicator of popularity of the establishment
, or the processor and the memory of the social network server further configured to:
determine from the monitored electronic communications a number of persons who frequent the establishment as an indicator of popularity of the establishment, or
wherein the establishment comprises a restaurant.

**15.** A non-transitory computer-readable medium having computer-executable instructions for causing a server comprising a processor and associated memory to manage electronic communications within a social group of a social network comprising:
monitoring electronic communications about an establishment posted by one or more persons in the social network;
determining from the monitored electronic communications at least one indicator of popularity of the establishment; and
generating a popularity score of the establishment from the determined at least one indicator of popularity of the establishment, or
further comprising:
communicating the popularity score of the establishment as a search result in response to a search query, or
where the search query is one of a targeted search query about the establishment and a general query about establishments in a geographical area that includes the establishment and further comprising:
performing the monitoring, determining and generating for each establishment of a plurality of establishments in the geographical area; and
determining a popularity ranking of the plurality of establishments in the geographical area in accordance with the generated popularity score of each of the plurality of establishments, or further comprising:
determining a popularity ranking of the monitored establishment in comparison to a plurality of establishments located in the geographical area, the popularity ranking determined in accordance with the generated popularity score of the monitored establishment; and
in response to a search query, provide the determined popularity ranking of the monitored establishment as a search result of the search query, or
where the search query is one of a targeted search query about the establishment and a general query about establishments in a geographical area that includes the establishment, or
further comprising:
performing the monitoring in response to a search query about establishments in the geographical area, or
further comprising:
recording the at least one indicator of popularity of the establishment present at the geographical location over time to determine patterns of popularity of the establishment from the recorded at least one indicator of popularity; and
generating the popularity score of the establishment from the determined patterns of popularity.
